# EUROPEAN PATENT SPECIFICATION

(11) **EP 4 599 413 B1**
(45) Date of publication and mention of the grant of the patent: **24.06.2026**
(21) Application number: 23802062.2
(22) Date of filing: 06.10.2023
(51) Int. Cl.: G06V 20/10

(54) **SYSTEM FOR DETERMINING CONSTRUCTION INSTALLATION ACCURACY**
SYSTEM ZUR BESTIMMUNG DER GENAUIGKEIT EINER BAUINSTALLATION
SYSTÈME DE DÉTERMINATION DE LA PRÉCISION D'INSTALLATION DANS UNE CONSTRUCTION

(30) Priority: 07.10.2022 US 202263414183 P
(43) Date of publication of application: 13.08.2025
(73) Proprietor: DuPont Safety & Construction, Inc., Wilmington, DE 19805 (US); DDP Specialty Electronic Materials US, LLC, Wilmington, DE 19805 (US)
(72) Inventor: RANSON, William, Richmond, VA 23234 (US); DUBNANSKY III, Michael, Wilmington, DE 19803 (US); ROBINSON, Jessica, Midland, MI 48642 (US); KAMBO, Samantha, Wilmington, DE 19803 (US); IOVANAC, Nicolae, Wilmington, DE 19803 (US)
(74) Representative: Abitz & Partner
(86) International application number: PCT/US2023/076168
(87) International publication number: WO 2024/077199

(56) References cited:
- WO-A1-2022/149071
- KR-B1- 102 434 139
- US-A1- 2020 151 833
- US-A1- 2020 410 209
- US-B2- 11 381 726

## Description

### CROSS-REFERENCE TO RELATED APPLICATIONS

This application claims the benefit of a co-pending, commonly assigned U.S. Provisional Patent Application No. 63/414,183, which was filed on October 7, 2022.

### BACKGROUND

Construction projects, whether minor renovations of existing structures or completely new construction, generally involve multiple stages of installation. Each stage of installation generally depends on the completion and sign-off of the previous stage, which can necessitate an inspection of the installation site to ensure that the installation has been completed accurately per manufacturer and/or industry guidelines. Once the installation has been approved as accurately or properly completed, the construction project can proceed to the next stage of installation.

In some instances, the manufacturer and/or industry guidelines can be extensive, and the contractor involved may inadvertently complete the installation inaccurately. Although an inspection of the installation site generally captures any improper installation(s), placing the contractor on notice to correct any outstanding issues, the inspection typically only occurs after the entire stage of installation has been completed. For example, one stage may involve installation and flashing of fifty windows. If the contractor improperly follows the manufacturer and/or industry guidelines, all fifty windows may be improperly installed and this improper installation would traditionally only be detected during inspection after all of the windows have already been installed. Fifty corrective actions would therefore be needed to remediate the improper installation. Correction by the contractor would therefore be extensive, increasing the overall cost and time for completion of the project. WO2022/149071 A1 describes systems and methods for capturing and analysing construction site images using image processing and machine learning. The disclosed techniques automatically detect construction-related objects, errors, deviations, and risks to support construction monitoring. US11381726 B2 describes systems, methods, and computer-readable media for processing construction site images to identify construction errors and quality conditions. Image analysis outputs are compared with selected thresholds based on object or contextual classifications to provide construction-related information.

### SUMMARY

The invention is defined by the appended claims. Embodiments of the present disclosure provide an exemplary system for determining construction installation accuracy. The system provides a means for detection of improper installation of one or more components at a construction site. In some embodiments, the system can be used to analyze an installation for accuracy before the entire installation has been completed. For example, a contractor can use the system to analyze the installation of a first window to ensure the installation has been completed accurately per manufacturer and/or industry standards and, once the system has confirmed accurate installation, the remaining windows can be installed in the same manner. This can significantly reduce faulty installation and subsequent repair, reducing costs of the construction project and overall frustration from the site owner and the contractor. In some embodiments, the system can be used to analyze an installation for accuracy after the entire installation has been completed. In some embodiments, the system can identify the areas of improper installation and provides guidelines on proper installation (and/or how the defect can be resolved). The system can therefore be used to detect and resolve defects before faulty building practices proliferate, reducing time and costs associated with the rework traditionally required in similar instances.

In accordance with embodiments of the present disclosure, an exemplary system for determining construction installation accuracy is provided. The system includes a database configured to electronically store data. The data includes an installation detection model trained based on historical construction installation data. The model can be based on an artificial intelligence and/or machine learning algorithm. The system includes a processing device in communication with the database. The processing device is configured to receive as input an image associated with a construction installation, electronically detect one or more components installed in the construction installation depicted in the image, execute the installation detection model to determine an accuracy of the installed one or more components, and generate a marker in the image to identify an improperly installed component of the one or more components.

In some embodiments, the installation detection model can be trained based on at least one of manufacturer or industry construction standards. The system can include a user electronic device in communication with the processing device. The user electronic device is capable of electronically transmitting the image as the input to the processing device via a communication interface. The processing device can be configured to transmit an updated image to the user electronic device via the communication interface. The updated image can include the marker generated in the image to identify the improperly installed component of the one or more components. In some embodiments, the processing device can be configured to transmit to the user electronic device instructions on how to correctly install the component of the one or more components.

In some embodiments, the one or more components installed in the construction installation depicted in the image can be of different types of installations. In some embodiments, the one or more components installed in the construction installation depicted in the image can be of the same type of installation. The processing device can be configured to detect, identify and/or classify each type of the different types of installations.

In some embodiments, executing the installation detection model to determine the accuracy of the installed one or more components can include generating a confidence level value relating to the installation accuracy of the improperly installed component. If the confidence level is equal to or greater than a threshold value, the processing device can be configured to transmit an updated image to a user electronic device via a communication interface, the updated image including the identified improperly installed component. If the confidence level is less than a threshold value, the processing device can be configured to transmit an updated image to a reviewer electronic device via a communication interface to request confirmation of the identification of the improperly installed component, and validation of the updated image by the reviewer trains the installation detection model and improves performance of the installation detection model.

In accordance with embodiments of the present disclosure, an exemplary method for determining accuracy of a construction installation is provided. The method includes receiving as input to a system for determining construction installation accuracy an image associated with a construction installation. The system for determining a construction installation accuracy can include a database configured to electronically store data. The data includes an installation detection model trained based on historical construction installation data. The system includes a processing device in communication with the database. The method includes electronically detecting one or more components installed in the construction installation depicted in the image. The method includes executing the installation detection model to determine an accuracy of the installed one or more components. The method includes generating a marker in the image to identify an improperly installed component of the one or more components.

The method can include capturing the image of the construction installation with a user electronic device, and transmitting the image to the system for determining construction installation accuracy. The method can include transmitting an updated image to the user electronic device via a communication interface, the updated image including the marker generated in the image to identify the improperly installed component of the one or more components. In some embodiments, the method can include transmitting to the user electronic device instructions on how to correctly install the component of the one or more components. The method can include training the installation detection model based on at least one of manufacturer or industry construction standards. In some embodiments, the one or more components installed in the construction installation depicted in the image can be of different types of installations, and the method can include detecting and identifying each type of the different types of installations.

In some embodiments, the method can include generating a confidence level value relating to the installation accuracy of the improperly installed component. If the confidence level is equal to or greater than a threshold value, the method can include transmitting an updated image to a user electronic device via a communication interface, the updated image including the identified improperly installed component. If the confidence level is less than a threshold value, the method can include transmitting an updated image to a reviewer electronic device via a communication interface to request confirmation of the identification of the improperly installed component. Validation of the updated image by the reviewer can train the installation detection model and can improve performance of the installation detection model .

In accordance with embodiments of the present disclosure, an exemplary non-transitory computer-readable medium storing instructions for determining an accuracy of a construction installation that are executable by a processing device is provided. Execution of the instructions by the processing device causes the processing device to receive as input to a system for determining construction installation accuracy an image associated with a construction installation. The system for determining a construction installation accuracy includes a database configured to electronically store data. The data includes an installation detection model trained based on historical construction installation data. The system includes the processing device in communication with the database. Execution of the instructions by the processing device causes the processing device to electronically detect one or more components installed in the construction installation depicted in the image. Execution of the instructions by the processing device causes the processing device to execute the installation detection model to determine an accuracy of the installed one or more components. Execution of the instructions by the processing device causes the processing device to generate a marker in the image to identify an improperly installed component of the one or more components.

Any combination and/or permutation of embodiments is envisioned. Other objects and features will become apparent from the following detailed description considered in conjunction with the accompanying drawings. It is to be understood, however, that the drawings are designed as an illustration only and not as a definition of the limits of the present disclosure.

### BRIEF DESCRIPTION OF THE DRAWINGS

To assist those of skill in the art in making and using the system for determining construction installation accuracy, reference is made to the accompanying figures, wherein:
FIG. 1 is a block diagram of an exemplary system for determining construction installation accuracy in accordance with the present disclosure;
FIG. 2 is a block diagram of an exemplary computing device for implementing the exemplary system for determining construction installation accuracy in accordance with the present disclosure;
FIG. 3 is a block diagram of an exemplary system for determining construction installation accuracy environment in accordance with the present disclosure;
FIG. 4 is a block diagram of an exemplary system for determining construction installation accuracy in accordance with the present disclosure;
FIG. 5 is a block diagram of an exemplary system for determining construction installation accuracy in accordance with the present disclosure;
FIG. 6 is a block diagram of an exemplary system for determining construction installation accuracy in accordance with the present disclosure;
FIG. 7 is a view of one, non-limiting type of improper installation capable of being detected by an exemplary system for determining construction installation accuracy in accordance with the present disclosure;
FIG. 8 is a view of one, non-limiting type of improper installation capable of being detected by an exemplary system for determining construction installation accuracy in accordance with the present disclosure;
FIG. 9 is a view of one, non-limiting type of improper installation capable of being detected by an exemplary system for determining construction installation accuracy in accordance with the present disclosure;
FIG. 10 is a view of one, non-limiting type of improper installation capable of being detected by an exemplary system for determining construction installation accuracy in accordance with the present disclosure;
FIG. 11 is a view of one, non-limiting type of improper installation capable of being detected by an exemplary system for determining construction installation accuracy in accordance with the present disclosure;
FIG. 12 is a view of one, non-limiting type of improper installation capable of being detected by an exemplary system for determining construction installation accuracy in accordance with the present disclosure;
FIG. 13 is a view of one, non-limiting type of improper installation capable of being detected by an exemplary system for determining construction installation accuracy in accordance with the present disclosure;
FIG. 14 is a view of one, non-limiting type of improper installation capable of being detected by an exemplary system for determining construction installation accuracy in accordance with the present disclosure;
FIG. 15 is an exemplary user interface depicting installed components detected by an exemplary system for determining construction installation accuracy in accordance with the present disclosure;
FIG. 16 is an exemplary user interface depicting installed components detected by an exemplary system for determining construction installation accuracy in accordance with the present disclosure;
FIG. 17 is an exemplary user interface depicting installed components detected by an exemplary system for determining construction installation accuracy in accordance with the present disclosure;
FIG. 18 is an exemplary user interface depicting installed components detected by an exemplary system for determining construction installation accuracy in accordance with the present disclosure;
FIG. 19 is an exemplary user interface depicting a model training/review process for an exemplary system for determining construction installation accuracy in accordance with the present disclosure;
FIG. 20 is an exemplary user interface depicting a model training/review process for an exemplary system for determining construction installation accuracy in accordance with the present disclosure;
FIG. 21 is an exemplary user interface depicting a model training/review process for an exemplary system for determining construction installation accuracy in accordance with the present disclosure;
FIG. 22 is an exemplary user interface depicting a model training/review process for an exemplary system for determining construction installation accuracy in accordance with the present disclosure; and
FIG. 23 is an exemplary user interface depicting a model training/review process for an exemplary system for determining construction installation accuracy in accordance with the present disclosure.

### DETAILED DESCRIPTION

As used herein, the term "construction installation" refers to (but is not limited to) any type of structural, mechanical, electrical, and/or plumbing modifications and/or additions to a building. This can refer to any type of building type, such as residential or commercial, and can include brand new construction or renovations of an existing structure.

As used herein, the term "electronically storing" or "electronically store" refers to (but is not limited to) the ability to receive, maintain and/or transmit data on a physical and/or cloud-based server. The data can be maintained in an electronic memory and/or database.

As used herein, the term "installation detection model" refers to (but is not limited to) an artificial intelligence and/or machine learning algorithm or software configured to receive as input media (e.g., an image and/or video) associated with a construction installation, analyze the media to detect one or more components installed at the jobsite, determine the accuracy of installation of the one or more components, and output feedback on the accuracy of the installation.

As used herein, the term "train" or "trained" refers to (but is not limited to) inputting into the installation detection model historical data, such as previous construction installations, and including designations of installations of components as accurate/correct or inaccurate/incorrect. The installation detection model receives as input new media associated with construction installation(s) and, based on the historical data, outputs determinations of accurate or inaccurate installation practices. The output is reviewed, adjusted as needed by a reviewer, and input into the installation detection model to further refine and improve the detection capabilities of the installation detection model.

As used herein, the term "confidence level" or "confidence value" refers to (but is not limited to) a numerical value or percentage between 0 and 100. The confidence level or value indicates the level at which the installation detection model is capable of accurately detecting and identifying incorrect installations in the construction jobsite based on media input. The confidence level can provide an indication of how well the predicted defect label aligns with the true location of the defect, as well as the probability that the label actually contains the indicated installation defect. The higher the confidence level, the more accurate the detected installation and associated label. A threshold confidence level or value can be used to determine if a reviewer involvement is needed to oversee the determinations output by the installation detection model. For example, the confidence level can be a function of each individual prediction. If a given prediction is associated with a high confidence value (e.g., equal to or above a threshold value), that image can be determined by the system to not necessitate processing by a reviewer. If a given prediction is associated with a low confidence value (e.g., below a threshold value), the image can be determined by the system to necessitate processing by a reviewer. As the model is refined through continued training, the confidence levels can improve on average. However, the confidence values associated with predictions on new images generally cannot be accurately forecasted prior to the model viewing and analyzing said new images. In some embodiments, the threshold confidence level or value can be about, e.g., 85%-95% inclusive, 85%-94% inclusive, 85%-93% inclusive, 85%-92% inclusive, 85%-91% inclusive, 85%-90% inclusive, 85%-89% inclusive, 85%-88% inclusive, 85%-87% inclusive, 85%-86% inclusive, 86%-95% inclusive, 87%-95% inclusive, 88%-95% inclusive, 89%-95% inclusive, 90%-95% inclusive, 91%-95% inclusive, 92%-95% inclusive, 93%-95% inclusive, 94%-95% inclusive, 86%-94% inclusive, 87%-93% inclusive, 88%-92% inclusive, 89%-91% inclusive, 85%, 86%, 87%, 88%, 89%, 90%, 91%, 92%, 93%, 94%, 95%, or the like. In some embodiments, the threshold confidence level or value in the system can be adjusted based on the performance results of the model.

In some embodiments, the confidence level or value can be between 0-1, inclusive, to represent the percentage of confidence in the determination by the system (e.g., 0.8 representing 80%). The confidence level output by the system is used to determine how to proceed with the detected defect. In some embodiments, the decision made by the system on how to proceed for the detected defect can depend on the type of defect. For example, a confidence value of less than 20% that a defect was detected can be a bottom threshold indicating to the user that there is no actual likelihood of a defect. In such instance, the system does not flag or indicate that a defect was detected. As a further example, a confidence value of 20-80%, inclusive, that a defect was detected can indicate that there is a likelihood of a detected defect that necessitates a further review for validation before confirming the defect to the end user. In such instance, the system flags the defect for review and validation before sending the validated defect indication to the end user. As a further example, a confidence value of over 80% that a defect was detected can be a top threshold indicating to the user that there is a high likelihood of a detected defect, with no additional review/validation needed. In such instance, the system can automatically transmit a notification to the end user that a defect was detected. **In** some embodiments, the bottom and top thresholds for the 20-80% range can be different for the type of defect detected. For example, one type of defect can have a range of 20-80%, which a different type of defect can have a range of 30-70%. As an example, defects that have a lower risk to the building envelope performance (e.g., too many or missing fasteners) can have a higher bottom threshold value, while defects that have a higher risk to the building envelope performance (e.g., missing or incorrectly installed window flashing) can have a lower bottom threshold value. Therefore, depending on the type of defect, the system confidence value thresholds can be independently set to provide more oversight for high risk installations as compared to low risk installations.

Such difference in confidence values for different types of defects allows for a weighted decision process in determining whether a defect exists, with more dangerous defects having a lower (bottom) threshold value to ensure less frequent false negatives. The top and bottom thresholds for the confidence value range and decision can therefore be set internally depending on the types of defects to be detected and the decision to be made by the system (regarding no defect, review/validation required, and defect detected). As discussed herein, the review/validation provided to the system helps further train the machine learning aspect of the system to improve detection in the future. Using a lower bottom threshold number ensures less false negatives, ensuring more validation of defect detections. A lower top threshold number ensures a faster operation of the system by necessitating less review/validation. In contrast, a higher top threshold number would necessitate a larger number of review/validation.

As used herein, the term "marker" refers to (but is not limited to) any designation on an image and/or video to identify an area of the image and/or video smaller than the overall area of the image and/or video. The marker can be in the form of a bounding box, circle, oval, arrow, or the like, and can encompass/surround or substantially encompass/surround an area of interest in the media. The marker can be automatically generated by the system based on detection of a proper and/or improper installation. The marker can be overlaid on the original image to designate the desired area, and can be modifiable by a user of the system to adjust the size and/or location of the marker.

The exemplary system discussed herein provides an interface for remotely detecting construction jobsite issues related to improper installation of one or more components. The system can conveniently allow a user (e.g., a contractor, inspector, or the like) to electronically input into the system one or more images (and/or videos) captured at the jobsite, and the system automatically analyzes and detects the accuracy of installation (e.g., whether installation is proper) based on manufacturer/supplier and/or industry standards using an artificial intelligence and/or machine learning detection model. The model can be trained based on historical data, such as previous images/videos of construction jobsites and proper/improper installation of components. If the system detects improper installation of a component, the system can generate a marker on the image and returns the image (or one or more images) to the user with an indication that remediation is needed. In some embodiments, the system can provide information on how remediation can be achieved. For example, the system can be programmed to classify the detected defect based on a specific category or defect type. Remediation for each of the specific categories or defect types based on industry standards can be programmed into the system, such that based on the classification assigned to the detected defect, the appropriate remediation recommendation can be transmitted to the user. **In** some embodiments, the system can be used to predict potential issues that may occur during installation based on the historical data and can provide guidance to the user before installation of components is to commence. The system therefore provides a convenient means for the user to determine if installation has been correctly achieved at earlier stages of the construction project, allowing the user to remediate the installation (if needed) and ensure that all subsequent similar installations are correctly completed. For example, if one stage of the project involves installation and flashing of fifty windows, the system can be used to confirm that installation is proper after only one window has been installed. If the installation is deemed to be incorrect or inaccurate, the contractor can remediate the installation on the single window and input an image of the corrected installation into the system to confirm that the updated installation is now correct. If the installation is deemed to be correct or accurate, the contractor can proceed to installation of the other forty-nine windows. The amount of potential corrective work required by the contractor is thereby significantly decreased. The system can be used throughout the building process to identify defects and resolve them before the faulty building practices proliferate. Such feedback and remediation can reduce the overall costs and time associated with construction projects by minimizing the level of rework required through traditional construction methods.

In some embodiments, the system can be provided as a user interface accessible through an electronic device, such as a software application on a mobile electronic device, that allows the user to capture and upload electronic photographs and/or videos of the installation site. In some embodiments, the system can provide real-time or substantially instantaneous feedback to the user regarding the accuracy of the installation captured in the uploaded photographs. In some embodiments, if the confidence level of the artificial intelligence and/or machine learning algorithm/model is below a predetermined threshold value, the system can request oversight from a reviewer to confirm the system findings, thereby further training the model to improve overall accuracy and operation of the system. In some embodiments, the system can be integrated with other systems used by contractors for management of the jobsite. For example, the system can collect additional jobsite information in addition to the images depicting errors in installation in order to correlate what other variables may occur when faulty installation occurs, allowing the system to be used for prediction and prevention before installation takes place, thereby assisting contractors beyond identification of errors. In some instances, the system can receive as input the weather conditions at the construction site and can adjust the guidance for installation based on the weather conditions according to industry and/or manufacturer/supplier standards. The system can therefore use environmental conditions to assist with installation to prevent errors before they can occur.

The defect detection algorithm used by the model can include object detection architecture that accepts bitmap images as input and attempts to identify the presence of a certain set of predefined objects within the image. In the implementation of the system, the objects identified can include specific installation defects. The algorithm can consist of a network (e.g., a neural network) of mathematical operations performed on the pixel values of the input image that are defined by adjustable parameters (e.g., weights). These operations can produce a set of numbers that define information related to object(s) detected within the image, including, but not limited to: (i) the position(s) of a bounding box describing the location(s) of the detected object(s), (ii) the probability that a given bounding box contains an object, (iii) and the probabilities of a detected object belonging to any of the possible predefined object classes (e.g., defect types).

Training of the algorithm can include the steps of collecting images that have been annotated to describe the location and type of any objects with the image and passing them through the model to obtain a set of predicted values to compare to the known labels. The values of the network weights can be adjusted to attempt to minimize the deviation between network output and the ground truth through backwards propagation of error through the network. Training can be conducted iteratively until some termination criterion is reached, including, but not limited to: (i) a specified number of passes through the entire training image dataset, (ii) performance reaching an acceptable threshold (e.g., confidence level threshold), and/or (iii) a specified amount of real time has passed. Throughout the process, a set of data can be withheld from the network in order to allow for an unbiased estimate of the performance of the network on new, unseen data.

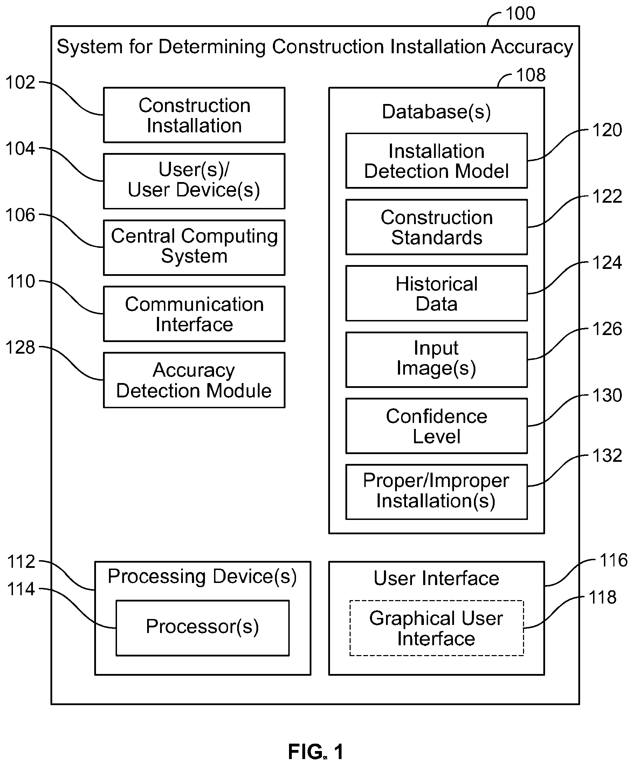

FIG. 1 is a block diagram of an exemplary system 100 for determining construction installation accuracy (hereinafter "system 100"). The system generally includes one or more construction installations 102 (e.g., construction projects or jobsites) and one or more users 104 connected to the system 100 through one or more user devices. The users 104 can include, e.g., contractors, architects, engineers, inspectors, suppliers, manufacturers, combinations thereof, or the like. The users 104 can be individuals associated with the construction project, those supplying materials for installation at the jobsite, those performing an inspection of the jobsite, or the like. The users 104 can also include individuals who review the analysis provided by the system 100 to ensure the detection algorithm and/or model is accurately trained and providing accurate error detection results. The users 104 can electronically transmit data to the system 100 and receive data from the system 100 for determining whether certain installations have been performed correctly/accurately, and for determining how improperly installed components can be remediated.

The system can include a central computing system 106 that is in communication with each of the users 104 (e.g., via their user devices) and the one or more databases 108 associated with the system 100 through a communication interface 110. The communication interface 110 is configured to provide for a communication network between components of the system 100, thereby allowing data to be electronically transmitted and/or received by the components of the system 100. The system 100 can include at least one processing device 112 with a processor 114 for receiving and processing the data stored in the system 100. The system 100 includes at least one user interface 116. In some embodiments, the user interface 116 can include a display in the form of a graphical user interface (GUI) 118. The GUI 132 can be a display incorporated into the user device to allow for users 104 to communicate with each other and/or the system 100 via the communication interface 110.

The database 108 can receive and electronically store data associated with implementation of the system 100. Such data can include an installation detection model 120, e.g., an artificial intelligence and/or machine learning algorithm trained to detect whether components have been installed properly or improperly at the jobsite based on input, analysis, and image detection operations. The database 108 can store construction standards 122 based on supplier/manufacturer and/or industry standards. The standards 122 indicate the proper installation of components and can provide remediation means for improperly installed components. The database 108 can store historical data 124, such as previously input images of construction installations that indicate proper and improper installations. The construction standards 122 and/or the historical data 124 can be used to train the model 120.

The database 108 can store images 126 input into the system 100 by the users 104. The images 126 can be close-up views of a construction installation or can be images of a construction jobsite provided from a distance. For example, the user 104 can input an image 126 depicting a detailed view of only a portion of a window installation (or multiple views of the window installation), or the image 126 can depict the entire window (or multiple windows) installed. Based on the input images 126, the processing device 112 can execute an accuracy detection module 128 implements the model 120 to analyze the images 126 and output whether the installation has been accurately/correctly/properly completed or not. The model 120 can generate a confidence level 130 (e.g., a percentage) for the analysis and detection results regarding the accuracy of the installation. If the confidence level 130 is below a preset threshold value, the system 100 can electronically transmit the results of the analysis to a reviewer for overview and confirmation/adjustment of the accuracy findings by the system. The confirmation/adjustment by the reviewer further trains the model 120 to improve the overall operation of the system 100.

If the confidence level 130 is above the preset threshold value, the system 100 can automatically transmit the results of the analysis to the user 104. The results of the analysis and the findings can be electronically saved in the database as proper/improper installations 132. The installations 132 can be in the form of an image (similar to the input images 126) with a label, bounding box, or similar designation clearly indicating which components (if any) in the image have been installed improperly. The information transmitted to the user 104 can include detailed information on the type of error in installation and, optionally, can include remediation information.

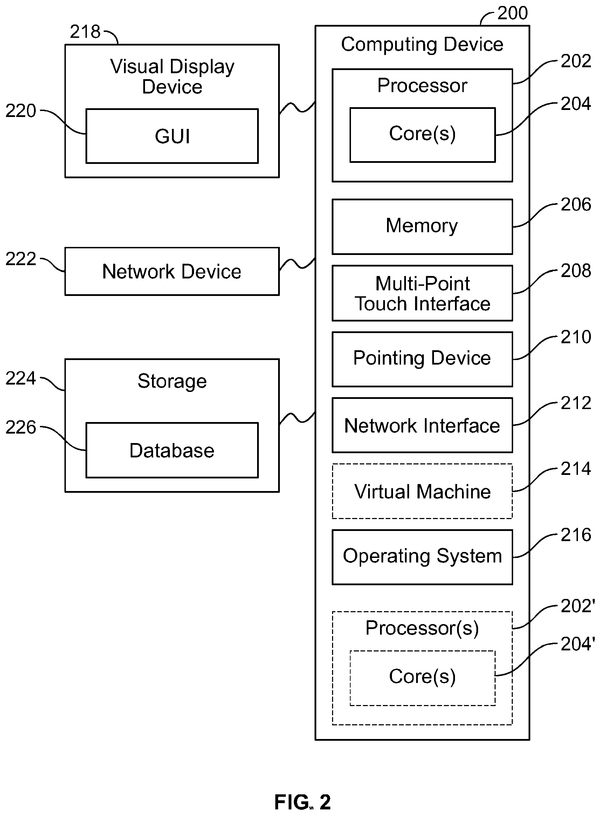

FIG. 2 is a block diagram of a computing device 200 in accordance with exemplary embodiments of the present disclosure. The computing device 200 includes one or more non-transitory computer-readable media for storing one or more computer-executable instructions or software for implementing exemplary embodiments. The non-transitory computer-readable media may include, but are not limited to, one or more types of hardware memory, non-transitory tangible media (for example, one or more magnetic storage disks, one or more optical disks, one or more flash drives), and the like. For example, memory 206 included in the computing device 200 may store computer-readable and computer-executable instructions or software for implementing exemplary embodiments of the present disclosure (e.g., instructions for operating the accuracy detection module, instructions for operating the installation detection model, instructions for operating the processing device, instructions for operating the communication interface, instructions for operating the user interface, instructions for operating the central computing system, combinations thereof, or the like). The computing device 200 also includes configurable and/or programmable processor 202 and associated core 204, and optionally, one or more additional configurable and/or programmable processor(s) 202' and associated core(s) 204' (for example, in the case of computer systems having multiple processors/cores), for executing computer-readable and computer-executable instructions or software stored in the memory 206 and other programs for controlling system hardware. Processor 202 and processor(s) 202' may each be a single core processor or multiple core (204 and 204') processor.

Virtualization may be employed in the computing device 200 so that infrastructure and resources in the computing device 200 may be shared dynamically. A virtual machine 214 may be provided to handle a process running on multiple processors so that the process appears to be using only one computing resource rather than multiple computing resources. Multiple virtual machines may also be used with one processor. Memory 206 may include a computer system memory or random access memory, such as DRAM, SRAM, EDO RAM, and the like. Memory 206 may include other types of memory as well, or combinations thereof.

A user may interact with the computing device 200 through a visual display device 218 (e.g., a personal computer, a mobile smart device, or the like), such as a computer monitor, which may display at least one user interface 220 (e.g., a graphical user interface) that may be provided in accordance with exemplary embodiments. The computing device 200 may include other I/O devices for receiving input from a user, for example, a camera, a keyboard, microphone, or any suitable multi-point touch interface 208, a pointing device 210 (e.g., a mouse). The keyboard 208 and the pointing device 210 may be coupled to the visual display device 218. The computing device 200 may include other suitable conventional I/O peripherals.

The computing device 200 may also include at least one storage device 224, such as a hard-drive, CD-ROM, eMMC (MultiMediaCard), SD (secure digital) card, flash drive, non-volatile storage media, or other computer readable media, for storing data and computer-readable instructions and/or software that implement exemplary embodiments of the system described herein. Exemplary storage device 224 may also store at least one database 226 for storing any suitable information required to implement exemplary embodiments. For example, exemplary storage device 224 can store at least one database 226 for storing information, such as data relating to the installation detection model, construction standards, historical data, input images, confidence level, proper/improper installations, combinations thereof, or the like, and computer-readable instructions and/or software that implement exemplary embodiments described herein. The databases 226 may be updated by manually or automatically at any suitable time to add, delete, and/or update one or more items in the databases.

The computing device 200 can include a network interface 212 configured to interface via at least one network device 222 with one or more networks, for example, a Local Area Network (LAN), a Wide Area Network (WAN) or the Internet through a variety of connections including, but not limited to, standard telephone lines, LAN or WAN links (for example, 802.11, T1, T3, 56kb, X.25), broadband connections (for example, ISDN, Frame Relay, ATM), wireless connections, controller area network (CAN), or some combination of any or all of the above. The network interface 212 may include a built-in network adapter, a network interface card, a PCMCIA network card, Pa CI/PCIe network adapter, an SD adapter, a Bluetooth adapter, a card bus network adapter, a wireless network adapter, a USB network adapter, a modem or any other device suitable for interfacing the computing device 200 to any type of network capable of communication and performing the operations described herein. Moreover, the computing device 200 may be any computer system, such as a workstation, desktop computer, server, laptop, handheld computer, tablet computer (e.g., the tablet computer), mobile computing or communication device (e.g., the smart phone communication device), an embedded computing platform, or other form of computing or telecommunications device that is capable of communication and that has sufficient processor power and memory capacity to perform the operations described herein.

The computing device 200 may run any operating system 216, such as any of the versions of the Microsoft^{®} Windows^{®} operating systems, the different releases of the Unix and Linux operating systems, any version of the MacOS^{®} for Macintosh computers, any embedded operating system, any real-time operating system, any open source operating system, any proprietary operating system, or any other operating system capable of running on the computing device and performing the operations described herein. In exemplary embodiments, the operating system 216 may be run in native mode or emulated mode. In an exemplary embodiment, the operating system 216 may be run on one or more cloud machine instances.

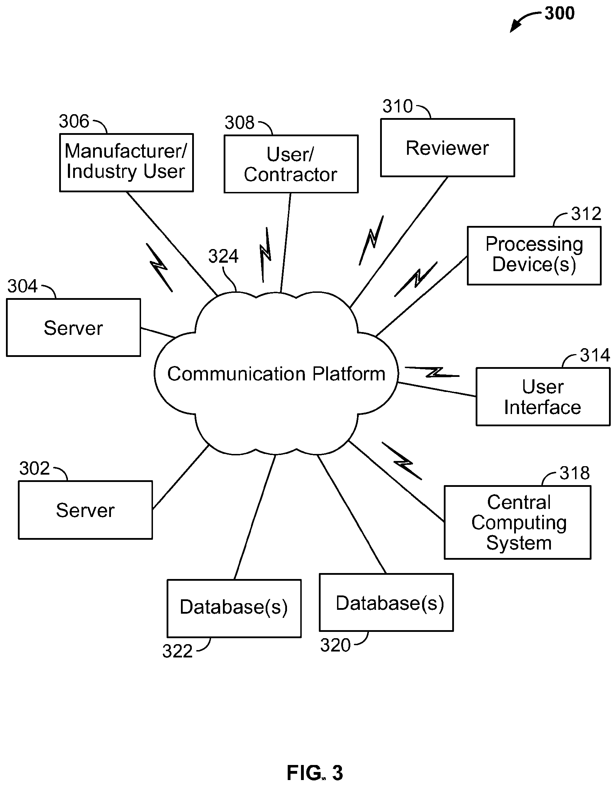

FIG. 3 is a block diagram of an exemplary system environment 300 for construction installation accuracy detection in accordance with exemplary embodiments of the present disclosure. The environment 300 can include servers 302, 304 configured to be in communication with at least one user 306 (e.g., manufacturers, industry suppliers, or the like), at least one user 308 (e.g., contractors, engineers, architects, or the like), at least one reviewer 310 (e.g., individuals training the model), at least one processing device 312, at least one user interface 314, and a central computing system 318 via a communication platform 324, which can be any network over which information can be transmitted between devices communicatively coupled to the network. For example, the communication platform 324 can be the Internet, Intranet, virtual private network (VPN), wide area network (WAN), local area network (LAN), and the like. **In** some embodiments, the communication platform 324 can be part of a cloud environment.

The environment 300 can include repositories or databases 320, 322, which can be in communication with the servers 302, 304, as well as the at least one user 306, at least one user 308, at least one reviewer 310, at least one processing device 312, at least one user interface 314, and the central computing system 318, via the communications platform 324. In exemplary embodiments, the servers 302, 304, at least one user 306, at least one user 308, at least one reviewer 310, at least one processing device 312, at least one user interface 314, and the central computing system 318 can be implemented as computing devices (e.g., computing device 200). Those skilled in the art will recognize that the databases 320, 322 can be incorporated into at least one of the servers 302, 304. In some embodiments, the databases 320, 322 can store data relating to installation detection model, construction standards, historical data, input images, confidence level, proper/improper installations, combinations thereof, or the like, and such data can be distributed over multiple databases 320, 322.

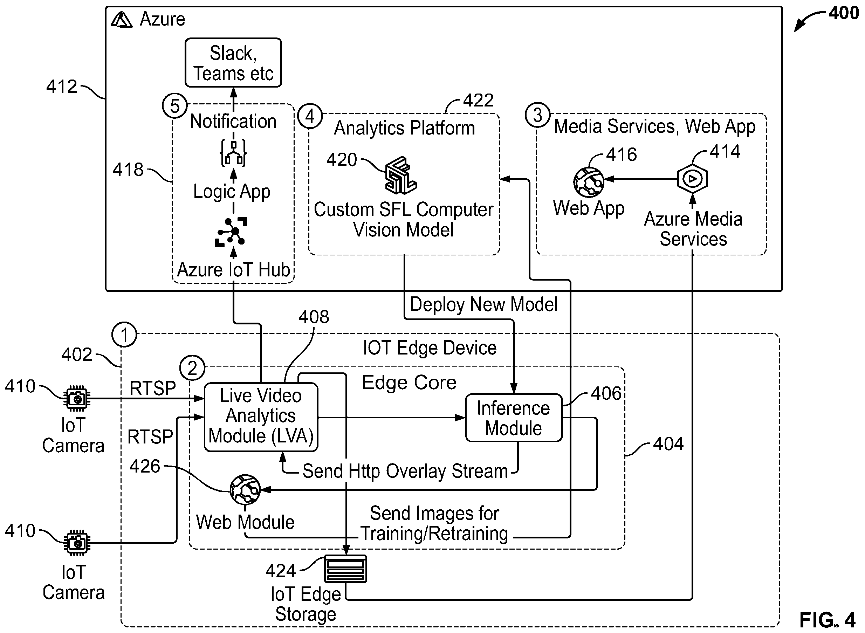

FIG. 4 is another block diagram of the artificial intelligence architecture for the exemplary system 400. The system 400 can work with a smart device using a cloud storage gateway 412 (e.g., AZURE EDGE^{®}, or the like) to transmit images from a construction jobsite to various functional modules, as illustrated in FIG. 4. At 402, an Internet-of-Things (IoT) edge device can communicate with an artificial intelligence (AI) load (e.g., inference module 406) at its core 404 that executes a vision model 420. An analytics platform or module 422 can electronically receive input from various IoT devices 410 in the form of, e.g., images, videos, or the like. In some embodiments, the videos can be recorded. In some embodiments, the videos can be streamed real-time (or substantially real-time). In some embodiments, a Real Time Streaming Protocol (RTSP) istream can be used with the AI module. An IoT storage device 424 can be used to electronically store the input media.

The core 404 can use the pre-trained recognition model to process the input media. A feedback loop with images for retraining the gateway and/or model can be streamed as a separate feed to a media service 414 via a web application 426. A web application 416 can be associated with an in communication with the media service 414. The media service 414 can transcode the feed and stream it to an end user via the web application 416. In some embodiments, a custom model can be tuned specifically for client needs. For example, the model can be tuned to scan for personal protective equipment (PPE) at a construction jobsite in real-time video streaming , or scanning for defects in window installation, building wrap seam treatments, defects in building envelope flashing installation, monitoring of weather conditions at the jobsite which could result in modified installation procedures, combinations thereof, or the like. The model can therefore be customized based on client needs and based on the type of conditions at the construction site.

An IoT edge hub 418 can receive recognition results from the AI module on an edge device and, depending on custom logic, can transmit information to the user via notifications, store information on the device, or store information for continued analysis by the system with an array of tools. The hub 418 can coordinate communication with the user device via notifications (e.g., visual, auditory, combinations thereof, or the like).

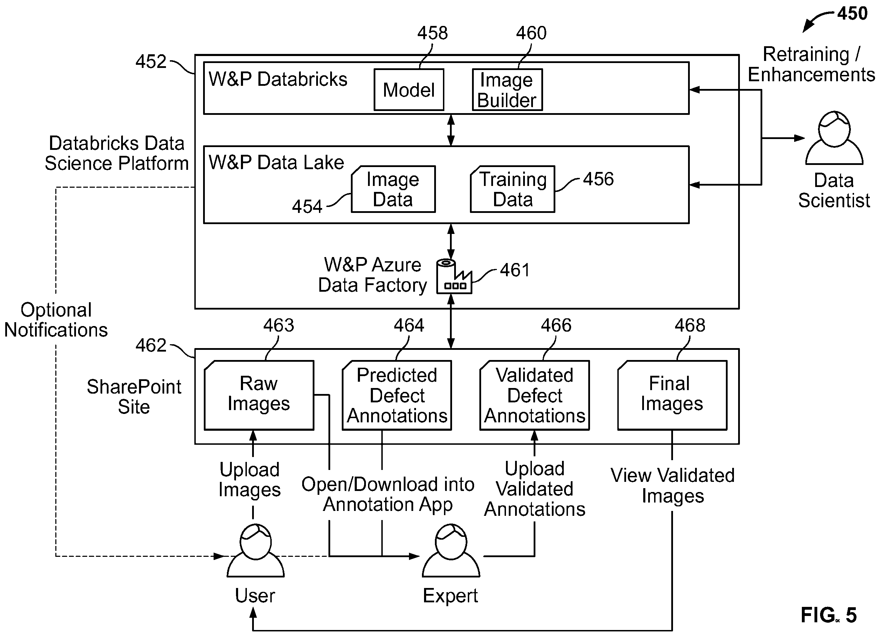

FIG. 5 is another block diagram of the exemplary system 450. The system 450 can include a physical and/or cloud-based database 452 configured to electronically receive and store image data 454 and training data 456. The image data 454 can include images of different construction installations and the training data 456 can include images that have been analyzed by a user and marked to reflect areas of proper and improper installation. The image data 454 and training data 456 can be used to train an artificial intelligence model 458 electronically stored in the database 452. The model 458 can be trained to analyze the input images and can be in communication with an image builder module 460 to generate images that have been annotated with a bounding box to identify improper installations. The system 450 can include a module 461 that allows for communication and/or interaction of the database 452 (and components stored in the database 452) with another physical and/or cloud-based database 462 (and components stored in the database 462).

The database 462 can electronically receive and store raw images 463 from a user. For example, the user can upload the images 463 to the database 462 for analysis by the model 458. The module 461 allows the model 458 to receive as input the raw images 463, and the model 458 can generate predicted defect annotations 464 on the image, with the annotations 464 made available to the user for review. If a confidence value is below a threshold level for the predicted defects, the system 450 can transmit the annotations 464 to an outside individual (e.g., an expert) for review and confirmation or modification of the annotations 464. The individual can input the feedback on the annotations 464 as validated defect annotations 466 that can be electronically transmitted to the end user via a report 468.

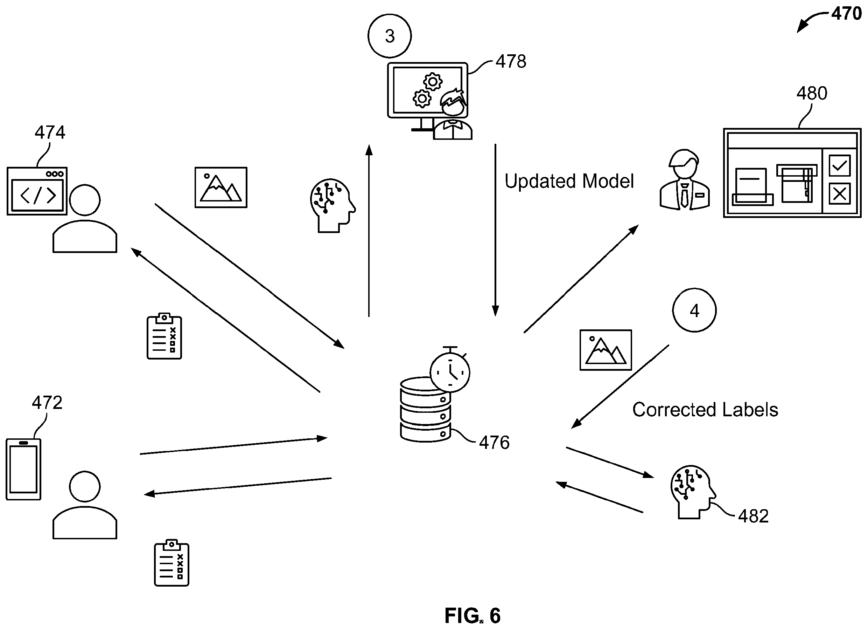

FIG. 6 is another block diagram of the exemplary system 470. At step 472, a mobile application running on a mobile device with a camera can be used to capture and electronically transmit media (e.g., images, videos, or the like) to a cloud-based storage system 476. In some embodiments, at step 474, business licensees can integrate their platform to enable it to send media to the cloud-based storage system 476 as well. The system 476 can be a database and/or scheduler environment that has been trained to analyze defects in the received media. The system 476 can be trained to review and analyze a variety of construction installations for accuracy, such as reverse shingling, incorrect overlap of flashing tape at corners, poor adhesion, inadequate bonding of tape to a substrate, or the like. The system 476 can automatically reject images it determines cannot be used due to, e.g., insufficient quality, insufficient detail, insufficient visibility, or the like. In some embodiments, the system 476 can transmit a notification to the mobile device requesting additional images with greater detail and/or different views to ensure the entire installation is clearly visible and can be analyzed by the model.

If the system 476 can determine the accuracy of installation by a confidence level above a predetermined threshold value, the system 476 can transmit the results of the analysis to the mobile device. If the system 476 determination is below a confidence value threshold, the system 476 can request that the findings of the system 476 be reviewed by an external party, e.g., a reviewer connected to the system 476. The system 476 can act as an intermediary between a human reviewer and the user of the mobile device. The system 476 can increase the efficiency of the review process by submitting a subset of potential defects to the reviewer. Defects in which the system 476 has a high confidence can be automatically labeled, whereas defects in which the system has a low confidence can be submitted to the reviewer, ensuring that the end user receives predictions/feedback that is accurate. In some embodiments, the system 476 can handle electronic storage of images, annotations of defects, and important metadata (such as time of day, location, source of each image). All images passing through the image receiving interface can be stored within the database.

The system 470 includes a data environment 478 for training of the model based on historical data and feedback from the reviewer during the analysis process. In some embodiments, for training purposes, all instances of the same issue (such as reverse shingling or poor adhesion) would be considered a single class, regardless of whether the error occurs at doors, vents or windows. Although discussed herein as an error at doors, vents or windows, it should be understood that the system is not limited to these locations and can instead detect errors in any installation type. The model can be trained by consuming images and annotated bounding boxes of defects in the images to learn to predict bounding boxes and the associated class of defects on new, previously unseen images. The model can be updated once enough newly validated data from the reviewer becomes available. The model can be continuously updated based on newly input images/media and/or feedback from a reviewer when the confidence level is below a threshold value. Feedback from the end user can also be used by the system 470 to update the model, thereby continuously improving operation of the machine learning and/or AI based model.

The data environment 478 can include the defect detection model along with a framework for updating the model in response to newly validated data. The environment 478 can include scripts for monitoring the performance of the model through internal validation and other health checks. In some embodiments, automatic retraining can be triggered by the scheduler (e.g., software that automates information transfer between components of the system 470, or the like) if a predefined quota of new images is available, or retraining can be manually conducted by data scientists as needed. Object detection models can be trained using sets of images along with annotations describing the x and y positions of bounding boxes that indicate the location of objects/components installed at the jobsite and depicted in an uploaded image (e.g., TYVEK^{®} installation defects). The model can both localize defects (by drawing an accurate bounding box around them) and predict the type of defect detected. The bounding box generated by the model can encompass the entire defective area detected by the model. Bounding box generation can be based on specific values of, e.g., pixel intensities, colors, or the like, from training of the model, such that the algorithm detects the presence of certain pixel values and/or patterns that are known to correspond with specific defects previously encountered by the model. The bounding box is generated when such specific values are detected. Training can consist of adjustment to network parameters to increase overlap of predicted bounding boxes over true defect locations, as well as to improve the accuracy of the class predictions. An as example, a trained model can accept an image of a TYVEK^{®} installation, produce as output coordinates describing the location and extent of defective installation points, and categorize the nature of each defective installation point.

The prediction of defects can be associated with a confidence score or value that indicates the certainty of the model in its prediction. The defect detection platform can rely on the use of two specific confidence thresholds, an upper and a lower value, to achieve accurate and efficient detection of defects while minimizing human reviewer involvement. Defect predictions with confidence levels above the high confidence threshold can be regarded by the system as having significant evidence of defective installation and can be automatically flagged and returned to the end user. Defect predictions with confidence values below the low confidence threshold can be regarded as having insufficient evidence of defective installation and can be automatically dropped from the report to the end user (e.g., a reviewer). Defect predictions which are of intermediate confidence can represent situations where enough evidence of a defect is present to warrant further review, but not enough to confirm a defective installation. These uncertain predictions can passed to the reviewer environment for validation/correction. In some embodiments, the confidence level threshold can be manually specified to the system to balance the tradeoff between false positives (e.g., predictions of defects when the installation is actually correctly installed) and false negatives (e.g., predictions of correct installations when the installation is actually incorrectly installed). The value of the confidence level threshold can be adjusted based on the desired operation of the system. For example, a confidence level threshold of 90% can ensure that only high confidence predictions are passed to the end user without involving a reviewer, although a lower or higher confidence level threshold may be selected based on the results of the system. Additional training and refinement of the defect detection model can reduce the number of cases requiring reviewer intervention, resulting in a smoothing, more efficient platform for defect detection.

At step 480, if additional review of the analyzed image is needed based on a low confidence level value, the detection system passes an image highlighting or otherwise labeling portions where additional review is needed. The reviewer can either confirm or reject the suggested low confidence predicted defects. Images that require additional review can be transmitted to a user interface that allows a reviewer to electronically adjust the location/size of predicted bounding boxes generated by the system, add or remove bounding boxes, adjust the category of defect for each bounding box, and/or then return the validated image to the database for further use. The system can combine the reviewer and model based defect detection results and transmits the results back to the end user. Validated images can be used to both retrain the defect detection model and to provide feedback to end users. Validated images can be used by the system to retrain the model and continuously improve performance.

At step 482, if the image contains a clear defect or a clear pass because of high probability (e.g., a high confidence value), the system 470 can immediately mark and verify the detections without requesting intervention by the reviewer. In such instances, the image transmitted to the reviewer (if any) would include only the highlighted or labeled portions that require reviewer analysis, and the image would not include the verified detections/labels having a high probability. In some embodiments, the image provided to the reviewer can include both the high and low confidence level detections with different labeling/highlighting used to allow the reviewer to visualize all detections and ensure all component installations have been reviewed and detected.

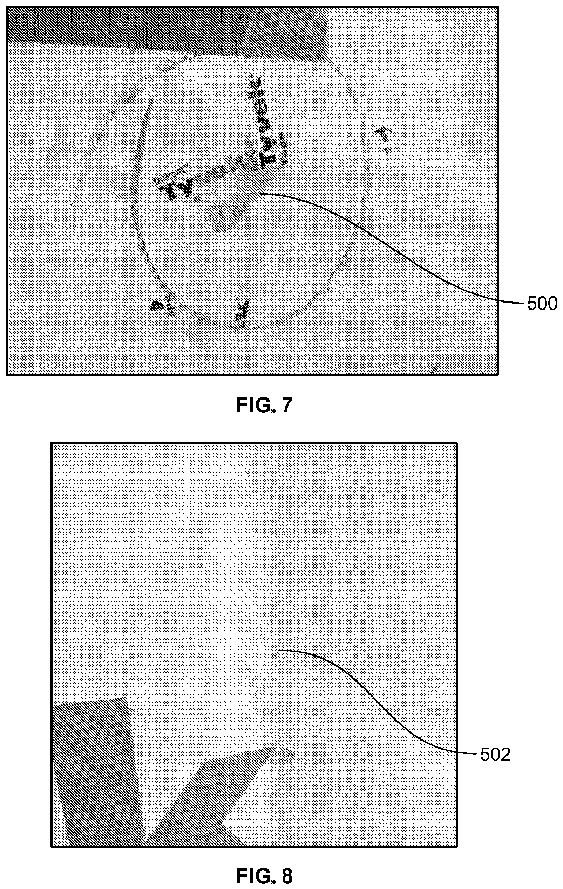

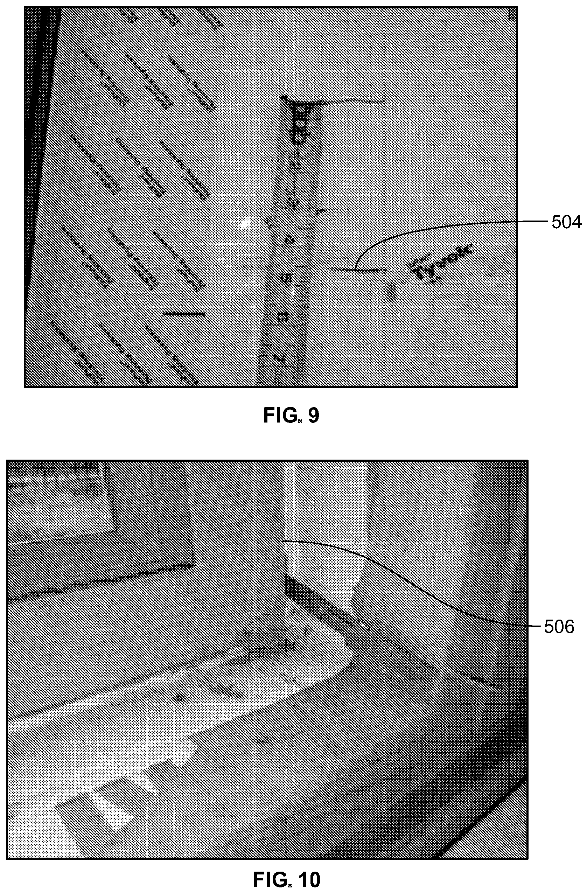

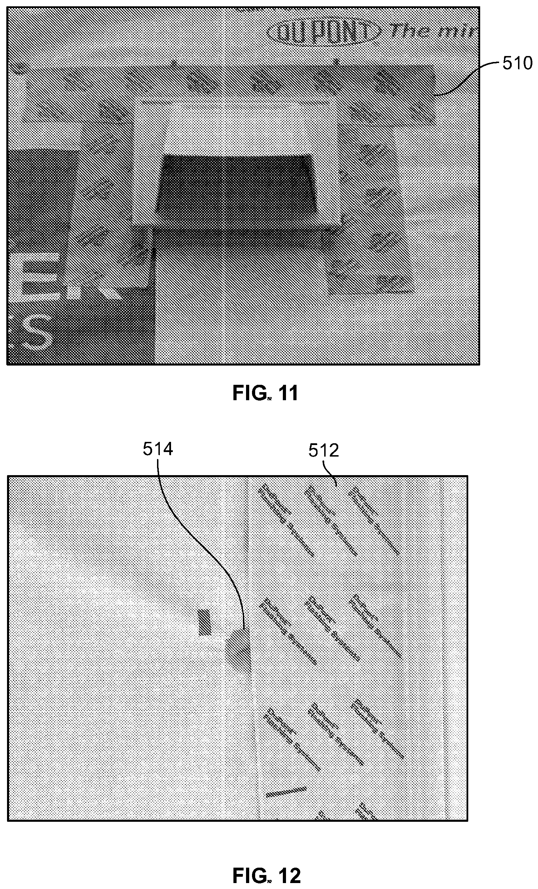

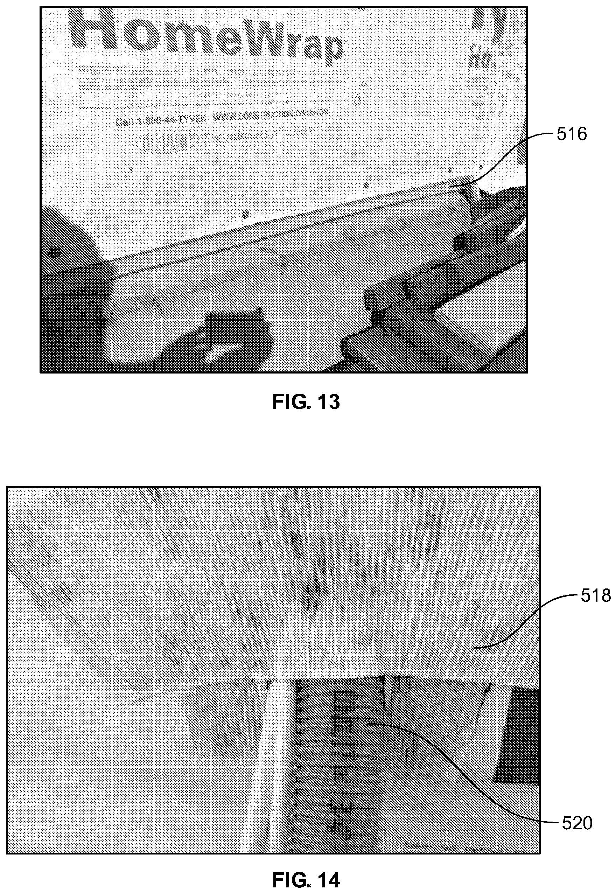

FIGS. 7-14 illustrate non-limiting examples of improper installation capable of being detected by the exemplary system discussed herein. FIGS. 7-14 also illustrate types of images which could be labeled and input into the system for model training purposes. FIG. 7 illustrates an area 500 of torn or damaged TYVEK^{®}; FIG. 8 illustrates an improper use of staples 502 without a cap; FIG. 9 illustrates an improper installation of weather board lacking a minimum distance 504 of overlap; FIG. 10 illustrates voids 506 in the sealant at the back dam; FIG. 11 illustrates the use of a non-approved flashing/tape 510 around an exhaust; FIG. 12 illustrates improper positioning of seam tape/flashing 512 over cap fasteners 514; FIG. 13 illustrates a lack of tape 516 extending two inches below a base plate; and FIG. 14 improperly installed quick flash panels 518 around a conduit 520.

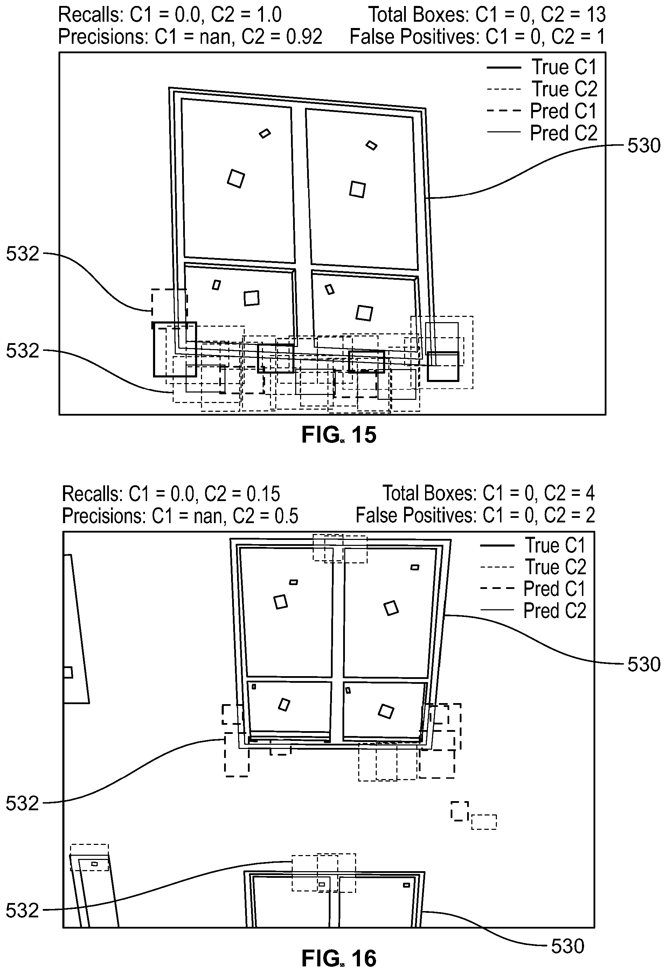

FIGS. 15-18 illustrate an exemplary user interface depicting feedback from the system on detected installed components. FIG. 15 illustrates an image that depicts an installation of only a single window 530, while FIG. 16 illustrates an image that depicts multiple window 530 installations. The system is capable of analyzing both types of images and detecting installed components in both instances. The system can generate a variety of bounding boxes 532 that each surround a respective installed component. The system can use color coding for the bounding boxes 532 to indicate to the end user whether the installation has been detected as accurately/correctly installed or not. For example, green bounding boxes can indicate an accurately/correctly installed component, while red bounding boxes can indicate an inaccurate/incorrectly installed component. An administrator may be able to select visualization of each type of bounding box 532 to ensure that the system is accurately detecting all installed components, while an end user awaiting feedback from the system may only visualize bounding boxes 532 for areas that are detected to require remediation. In some embodiments, the user interface of the system can include a drop down menu for selection by the user of the type of installation performed and depicted in the image, such that the system can focus on a specific type of installation for detection of defects association with these types of installations. The selection in the drop down can improve or optimize the success of defect detection.

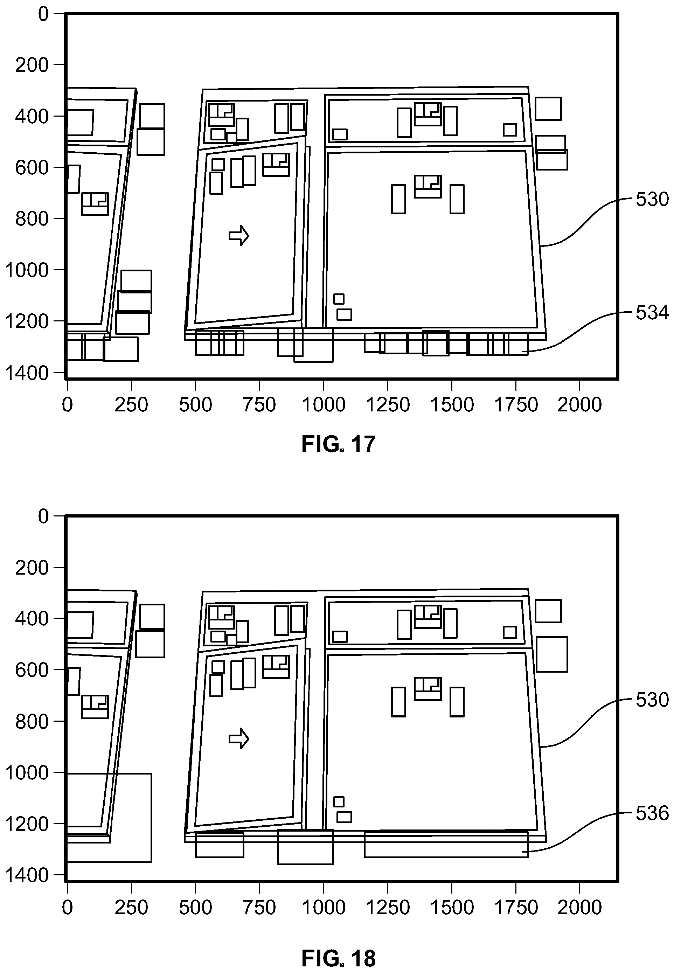

FIGS. 17 and 18 illustrate images that both depict a window 530 installation. Although the system may initially generate multiple bounding boxes 534 for a single installation, the system can determine that each of the boxes 534 in reality is associated with a single installation and a single defect. The system can therefore update the image to convert/merge the multiple bounding boxes 534 into a single bounding box 536 to provide for easier and more convenient visualization of the installation site. The merged bounding box 536 can provide for an easier means to communicate an area that requires attention by the end user, or can be a more generalized labeling for feedback from a reviewer. Similar bounding boxes can be used for the training process of the system, as well as the feedback provided to the end user with requests for remediation. In some embodiments, if there is an overlap of 30% or greater of the adjacent bounding boxes 534, the system can automatically merge the bounding boxes. In some embodiments, the overlap can be about, e.g., 30-80% inclusive, 30-70% inclusive, 30-60% inclusive, 30-50% inclusive, 30-40% inclusive, 40-80% inclusive, 50-80% inclusive, 60-80% inclusive, 70-80% inclusive, 40-70% inclusive, 50-60% inclusive, 20-30% inclusive, 20-25% inclusive, 25-30% inclusive, 20%, 25%, 30%, 40%, 50%, 60%, 70%, 80%, or the like, for the system to automatically merge the bounding boxes.

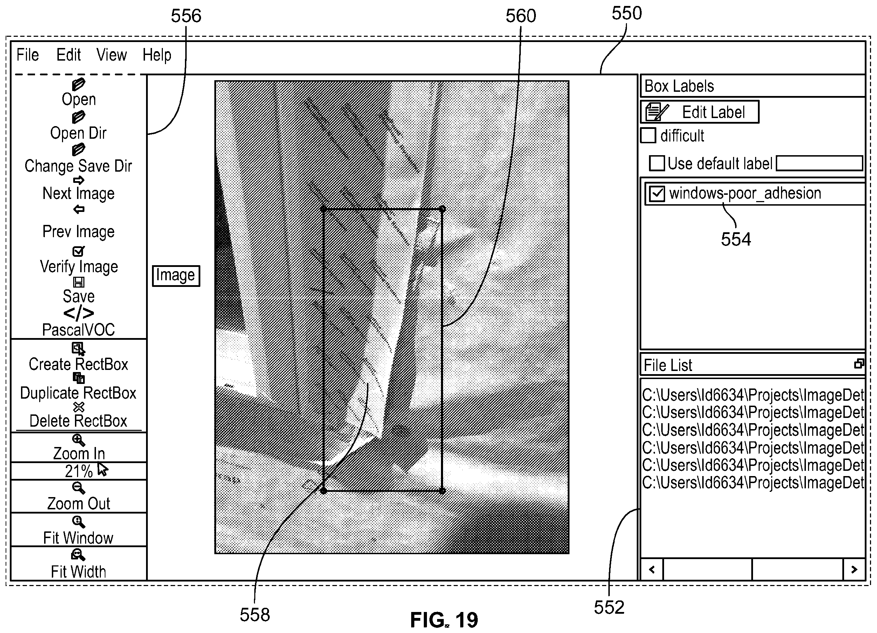

FIGS. 19-20 illustrate an exemplary user interface for training and/or reviewing the model prediction process. With reference to FIG. 19, the user interface can include a main section 550 depicting an image to be reviewed by the user. The user interface can include a media selection section 552 that includes a listing of related media to be reviewed by the user. For example, the section 552 can include media from the same installation site and/or of the same component (e.g., different views of the installation), allowing the user to flip through different media when reviewing and updating the model predictions. The user interface can include a defect type section 554 with a dropdown menu allowing for selection of the type of defect detected in the image, and an action menu 556 with options for adjusting or correcting the predictions made by the model.

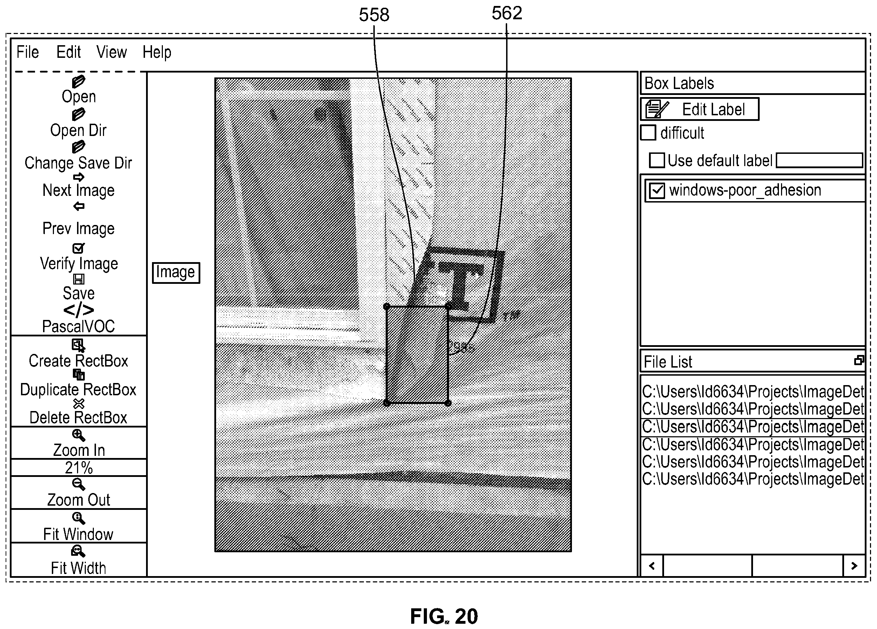

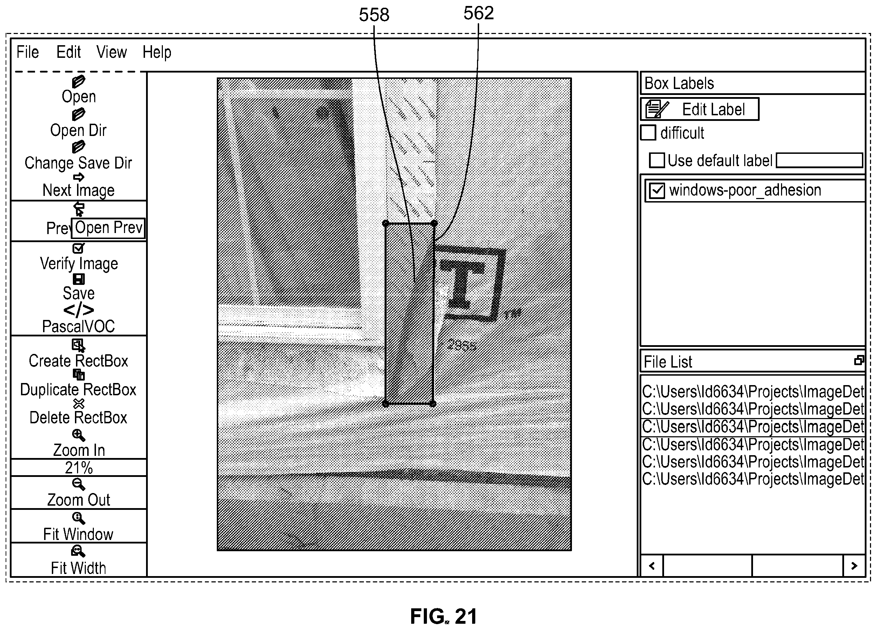

As illustrated in FIG. 19, the model has detected improper adhesion of the flashing tape 558 and has generated a bounding box 560 to surround the area detected to have the improper adhesion. FIG. 20 illustrates the same user interface with a different image of a window installation. In FIG. 20, the system has detected an improper adhesion of the flashing tape 558. However, the bounding box 562 generated by the system does not fully enclose the improper installation, with only a portion of the detached flashing tape 558 within the bounding box 562. FIG. 21 illustrates the ability of the reviewer to use the action menu 556 to modify the bounding box 562 such that it fully encompasses the improper installation site. The updated bounding box 562 is input to the system to further train the model, thereby improving the detection capabilities of the system, and can be transmitted to the end user for feedback on the improper installation.

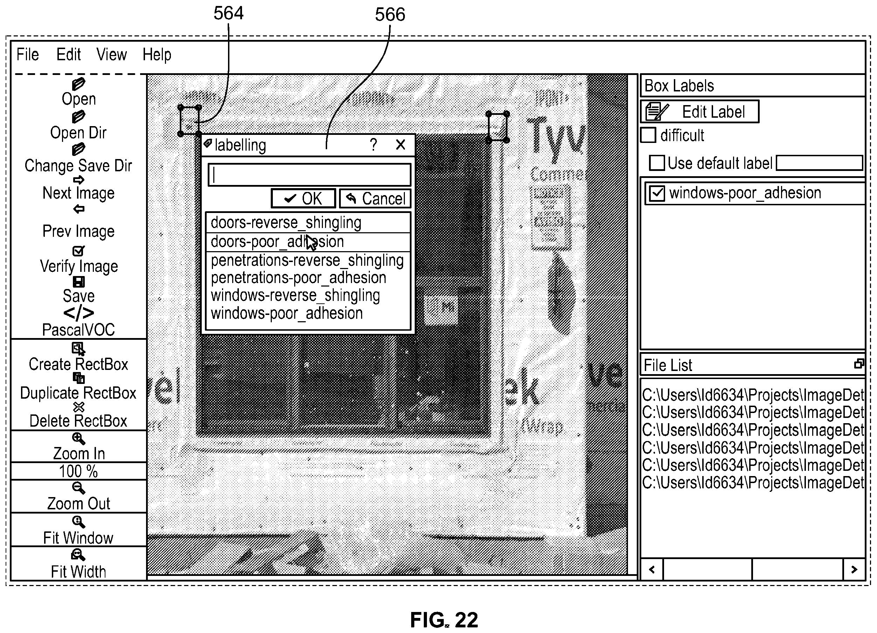

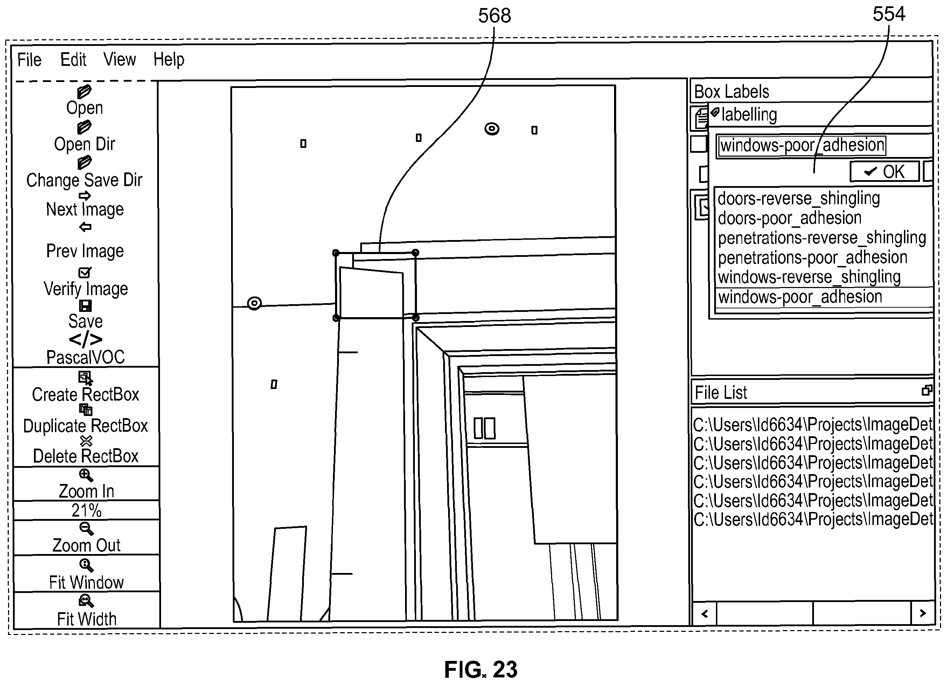

FIG. 22 illustrates another view of an installation in which an improper installation was not detected by the system. The action menu 556 can be used by the reviewer to create a new bounding box 564 to encompass the improper installation area, and a menu 566 can be used to select the type of defect. The input bounding box 564 and type of defect can be input into the system to further train the model, and are transmitted to the end user for remediation of the improper installation. In some instances, as illustrated in FIG. 23, the system may properly generate a bounding box 568, but the defect type selected in the defect type section 554 may be improper. The reviewer can update the section 554 to list the appropriate defect type, and the system can be trained based on the updated information. The system therefore allows for a continuous training cycle for any detections that fall below the threshold confidence level, allowing for continued improvement of the overall system and reduced review of the system operations over time. In some embodiments, the user interface of the system can incorporate one or more features of the LabelImg tool (e.g., available at https://github.com/HumanSignal/labelImg).

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the scope of the invention

## Claims

1. A system for determining construction installation accuracy, the system comprising:
a database configured to electronically store data, the data including an installation detection model trained based on historical construction installation data; and
a processing device in communication with the database, the processing device configured to:
receive as input an image associated with a construction installation;
electronically detect one or more components installed in the construction installation depicted in the image;
execute the installation detection model to determine an installation accuracy of the installed one or more components;
generate a confidence value associated with the installation accuracy determined for each of the one or more installed components;
if the confidence value is within a confidence value threshold range for a respective one or more installed components, identify the respective installed one or more installed components as being improperly installed, wherein the confidence value threshold range is selected based on a type of defect identified for each of the one or more installed components; and
generate a marker in the image to identify the one or more installed components having the confidence value within the confidence value threshold range as an improperly installed component.

2. The system of claim 1, wherein the installation detection model is trained based on at least one of manufacturer or industry construction standards.

3. The system of claim 1, comprising a user electronic device in communication with the processing device, the user electronic device capable of electronically transmitting the image as the input to the processing device via a communication interface, and wherein the processing device is configured to transmit an updated image to the user electronic device via the communication interface, the updated image including the marker generated in the image to identify the improperly installed components.

4. The system of claim 1, wherein the processing device is configured to transmit to the user electronic device instructions on how to correctly install the one or more components.

5. The system of claim 1, wherein the one or more components installed in the construction installation depicted in the image are of different types of installations, and wherein the processing device is configured to detect, identify and classify each type of the different types of installations.

6. The system of claim 1, wherein (i) if the confidence value is equal to or greater than a bottom threshold value of the confidence value threshold range, the processing device is configured to transmit an updated image to a user electronic device via a communication interface, the updated image including the identified improperly installed component, and (ii) if the confidence value is less than the bottom threshold value of the confidence value threshold range, the processing device is configured to transmit an updated image to a reviewer electronic device via a communication interface to request confirmation of the identification of the improperly installed component, and wherein validation of the updated image by the reviewer trains the installation detection model and improves performance of the installation detection model.

7. A method for determining accuracy of a construction installation, comprising:
receiving as input to a system for determining construction installation accuracy an image associated with a construction installation, the system for determining a construction installation accuracy including (i) a database configured to electronically store data, the data including an installation detection model trained based on historical construction installation data, and (ii) a processing device in communication with the database;
electronically detecting one or more components installed in the construction installation depicted in the image;
executing the installation detection model to determine an installation accuracy of the installed one or more components;
generating a confidence value associated with the installation accuracy determined for each of the one or more installed components;
if the confidence value is within a confidence value threshold range for a respective one or more installed components, identifying the respective installed one or more installed components as being improperly installed, wherein the confidence value threshold range is selected based on a type of defect identified for each of the one or more installed components; and
generating a marker in the image to identify the one or more installed components having the confidence value within the confidence value threshold range as an improperly installed component.

8. The method of claim 7, comprising at least one of:
capturing the image of the construction installation with a user electronic device, and transmitting the image to the system for determining construction installation accuracy;
transmitting an updated image to the user electronic device via a communication interface, the updated image including the marker generated in the image to identify the improperly installed components;
transmitting to the user electronic device instructions on how to correctly install the one or more components; or
training the installation detection model based on at least one of manufacturer or industry construction standards.

9. The method of claims 7, wherein the one or more components installed in the construction installation depicted in the image are of different types of installations, and the method comprises detecting and identifying each type of the different types of installations.

10. The method of claims 7, wherein (i) if the confidence value is equal to or greater than a bottom threshold value of the confidence value threshold range, the method comprises transmitting an updated image to a user electronic device via a communication interface, the updated image including the identified improperly installed component, and (ii) if the confidence value is less than a bottom threshold value of the confidence value threshold range, the method comprises transmitting an updated image to a reviewer electronic device via a communication interface to request confirmation of the identification of the improperly installed component, and wherein validation of the updated image by the reviewer trains the installation detection model and improves performance of the installation detection model.

11. A non-transitory computer-readable medium storing instructions for determining an accuracy of a construction installation that are executable by a processing device, wherein execution of the instructions by the processing device causes the processing device to:
receive as input to a system for determining construction installation accuracy an image associated with a construction installation, the system for determining a construction installation accuracy including (i) a database configured to electronically store data, the data including an installation detection model trained based on historical construction installation data, and (ii) the processing device in communication with the database;
electronically detect one or more components installed in the construction installation depicted in the image;
execute the installation detection model to determine an installation accuracy of the installed one or more components;
generate a confidence value associated with the installation accuracy determined for each of the one or more installed components;
if the confidence value is within a confidence value threshold range for a respective one or more installed components, identify the respective installed one or more installed components as being improperly installed, wherein the confidence value threshold range is selected based on a type of defect identified for each of the one or more installed components; and
generate a marker in the image to identify the one or more installed components having the confidence value within the confidence value threshold range as an improperly installed component.

12. The system of claim 1, wherein the type of defect identified for the installed component is a high risk installation or a low risk installation.

13. The system of claim 12, wherein if the type of defect is the high risk installation, the confidence value threshold range has a bottom threshold value smaller than the bottom threshold value for the low risk installation.

14. The system of claim 1, wherein the processing device is configured to generate multiple initial markers as elements improperly installed and associated with the improperly installed component and, if an overlap of two or more of the initial markers is greater than a predetermined threshold value, the processing device is configured to merge the two or more of the initial markers to generate the marker.

15. The system of claim 1, wherein the processing device is configured to automatically reject the image if the image has insufficient quality to detect the one or more components, and generate a notification requesting input of an additional image having sufficient quality to detect the one or more components.

## Patentansprüche

1. System zur Bestimmung der Genauigkeit einer Bauinstallation, wobei das System umfasst:
eine Datenbank, die zur elektronischen Datenspeicherung konfiguriert ist, wobei die Daten ein Installationserkennungsmodell einschließen, das auf der Grundlage historischer Bauinstallationsdaten trainiert wurde; und
eine Verarbeitungsvorrichtung, die mit der Datenbank kommuniziert und konfiguriert ist zum:
Empfangen, als Eingabe, eines Bilds, das einer Bauinstallation zugeordnet ist;
elektronisches Erkennen einer oder mehrerer in der auf dem Bild dargestellten Bauinstallation installierten Komponenten;
Ausführen des Installationserkennungsmodells, um eine Installationsgenauigkeit der installierten einen oder mehreren Komponenten zu bestimmen;
Erzeugen eines Konfidenzwerts, der der für jede der einen oder mehreren installierten Komponenten bestimmten Installationsgenauigkeit zugeordnet ist;
falls der Konfidenzwert innerhalb eines Konfidenzwertschwellenbereichs für jeweils eine oder mehrere installierte Komponenten liegt, Identifizieren der jeweiligen installierten einen oder mehreren Komponenten als nicht ordnungsgemäß installiert, wobei der Konfidenzwertschwellenbereich auf der Grundlage eines für jede der einen oder mehreren installierten Komponenten identifizierten Fehlertyps ausgewählt wird; und
Erzeugen, im Bild, einer Markierung, um die eine oder die mehreren installierten Komponenten, deren Konfidenzwert innerhalb des Konfidenzwertschwellenbereichs liegt, als nicht ordnungsgemäß installierte Komponenten zu identifizieren.

2. System nach Anspruch 1, wobei das Installationserkennungsmodell auf der Grundlage mindestens eines von einem Hersteller- oder Branchenbaustandard trainiert wird.

3. System nach Anspruch 1, umfassend eine elektronische Benutzervorrichtung, die mit der Verarbeitungsvorrichtung in Kommunikation steht, wobei die elektronische Benutzervorrichtung in der Lage ist, das Bild als Eingabe über eine Kommunikationsschnittstelle elektronisch an die Verarbeitungsvorrichtung zu übertragen, und wobei die Verarbeitungsvorrichtung so konfiguriert ist, dass sie ein aktualisiertes Bild über die Kommunikationsschnittstelle an die elektronische Benutzervorrichtung überträgt, wobei das aktualisierte Bild die im Bild erzeugte Markierung zur Identifizierung der nicht ordnungsgemäß installierten Komponenten einschließt.

4. System nach Anspruch 1, wobei die Verarbeitungsvorrichtung so konfiguriert ist, dass sie der elektronischen Benutzervorrichtung Anweisungen zur korrekten Installation der einen oder mehreren Komponenten überträgt.

5. System nach Anspruch 1, wobei es sich bei der einen oder den mehreren Komponenten, die in der in dem Bild dargestellten Bauinstallation installiert sind, um Komponenten handelt, die unterschiedlichen Installationstypen angehören, und wobei die Verarbeitungsvorrichtung so konfiguriert ist, dass sie jeden der unterschiedlichen Installationstypen erkennt, identifiziert und klassifiziert.

6. System nach Anspruch 1, wobei (i) falls der Konfidenzwert gleich oder größer als ein unterer Schwellenwert des Konfidenzwertschwellenbereichs ist, die Verarbeitungsvorrichtung so konfiguriert ist, dass sie ein aktualisiertes Bild über eine Kommunikationsschnittstelle an eine elektronische Benutzervorrichtung sendet, wobei das aktualisierte Bild die identifizierte, nicht ordnungsgemäß installierte Komponente einschließt, und (ii) falls der Konfidenzwert kleiner als der untere Schwellenwert des Konfidenzwertschwellenbereichs ist, die Verarbeitungsvorrichtung so konfiguriert ist, dass sie ein aktualisiertes Bild über eine Kommunikationsschnittstelle an eine elektronische Prüfervorrichtung sendet, um die Bestätigung der Identifizierung der nicht ordnungsgemäß installierten Komponente anzufordern, und wobei die Validierung des aktualisierten Bildes durch den Prüfer das Installationserkennungsmodell trainiert und die Leistung des Installationserkennungsmodells verbessert.

7. Verfahren zur Bestimmung der Genauigkeit einer Bauinstallation, umfassend:
Empfangen eines Bildes, das einer Bauinstallation zugeordnet ist, als Eingabe an ein System zur Bestimmung der Genauigkeit einer Bauinstallation, wobei das System zur Bestimmung der Genauigkeit einer Bauinstallation einschließt: (i) eine Datenbank, die so konfiguriert ist, dass sie Daten elektronisch speichert, wobei die Daten ein Installationserkennungsmodell einschließen, das auf der Grundlage historischer Daten von Bauinstallationen trainiert wurde, und (ii) eine Verarbeitungsvorrichtung, die mit der Datenbank kommuniziert;
elektronisches Erkennen einer oder mehrerer in der auf dem Bild dargestellten Bauinstallation installierter Komponenten;
Ausführen des Installationserkennungsmodells zur Bestimmung der Installationsgenauigkeit der installierten einen oder mehreren Komponenten;
Erzeugen eines Konfidenzwertes, der der für jede der einen oder mehreren installierten Komponenten bestimmten Installationsgenauigkeit zugeordnet ist;
falls der Konfidenzwert für jeweils eine oder mehrere installierte Komponenten innerhalb eines Konfidenzwertschwellenbereichs liegt, Identifizieren der jeweiligen einen oder mehreren installierten Komponenten als nicht ordnungsgemäß installiert, wobei der Konfidenzwertschwellenbereich auf der Grundlage eines für jede der einen oder mehreren installierten Komponenten identifizierten Fehlertyps ausgewählt wird; und
Erzeugen einer Markierung im Bild, um die eine oder mehreren installierten Komponenten, deren Konfidenzwert innerhalb des Konfidenzwertschwellenbereichs liegt, als eine nicht ordnungsgemäß installierte Komponente zu identifizieren.

8. Verfahren nach Anspruch 7, umfassend mindestens eines der folgenden:
Aufnehmen des Bilds der Bauinstallation mit einer elektronischen Benutzervorrichtung und Übertragen des Bilds an das System zur Bestimmung der Genauigkeit der Bauinstallation;
Übertragen eines aktualisierten Bildes an die elektronische Benutzervorrichtung über eine Kommunikationsschnittstelle, wobei das aktualisierte Bild die im Bild erzeugte Markierung zur Identifizierung der nicht ordnungsgemäß installierten Komponenten einschließt;
Übertragen von Anweisungen an die elektronische Benutzervorrichtung zur korrekten Installation der einen oder mehreren Komponenten; oder
Trainieren des Installationserkennungsmodells auf der Grundlage mindestens eines von einem Hersteller- oder Branchenbaustandard.

9. Verfahren nach Anspruch 7, wobei es sich bei den in dem Bild dargestellten Bauinstallation installierten Komponenten um verschiedene Typen von Installationen handelt und das Verfahren das Erkennen und Identifizieren der verschiedenen Typen von Installationen umfasst.

10. Verfahren nach Anspruch 7, wobei (i) falls der Konfidenzwert gleich oder größer als ein unterer Schwellenwert des Konfidenzwertschwellenbereichs ist, das Verfahren Senden eines aktualisierten Bilds über eine Kommunikationsschnittstelle an eine elektronische Benutzervorrichtung umfasst, wobei das aktualisierte Bild die identifizierte, nicht ordnungsgemäß installierte Komponente einschließt, und (ii) falls der Konfidenzwert kleiner als ein unterer Schwellenwert des Konfidenzwertschwellenbereichs ist, das Verfahren Senden eines aktualisierten Bilds über eine Kommunikationsschnittstelle an eine elektronische Prüfervorrichtung umfasst, um die Bestätigung der Identifizierung der nicht ordnungsgemäß installierten Komponente anzufordern, und wobei die Validierung des aktualisierten Bildes durch den Prüfer das Installationserkennungsmodell trainiert und die Leistung des Installationserkennungsmodells verbessert.

11. Nichtflüchtiges, computerlesbares Medium, das Anweisungen zur Bestimmung einer Genauigkeit einer Bauinstallation speichert, die von einer Verarbeitungsvorrichtung ausgeführt werden können, wobei die Ausführung der Anweisungen durch die Verarbeitungsvorrichtung die Verarbeitungsvorrichtung zu Folgendem veranlasst:
Empfangen, als Eingabe für ein System zur Bestimmung der Genauigkeit einer Bauinstallation, eines Bilds, das einer Bauinstallation zugeordnet ist, wobei das System zur Bestimmung der Genauigkeit einer Bauinstallation einschließt: (i) eine Datenbank, die so konfiguriert ist, dass sie Daten elektronisch speichert, wobei die Daten ein Installationserkennungsmodell einschließen, das auf der Grundlage historischer Daten von Bauinstallationen trainiert wurde, und (ii) die Verarbeitungsvorrichtung, die mit der Datenbank kommuniziert;
elektronisches Erkennen einer oder mehrerer in der auf dem Bild dargestellten Bauinstallation installierten Komponenten;
Ausführen des Installationserkennungsmodells, um eine Installationsgenauigkeit der installierten einen oder mehreren Komponenten zu bestimmen;
Erzeugen eines Konfidenzwerts, der der für jede der einen oder mehreren installierten Komponenten bestimmten Installationsgenauigkeit zugeordnet ist;
falls der Konfidenzwert innerhalb eines Konfidenzwertschwellenbereichs für jeweils eine oder mehrere installierte Komponenten liegt, Identifizieren der jeweiligen installierten einen oder mehreren Komponenten als nicht ordnungsgemäß installiert, wobei der Konfidenzwertschwellenbereich auf der Grundlage eines für jede der einen oder mehreren installierten Komponenten identifizierten Fehlertyps ausgewählt wird; und
Erzeugen, im Bild, einer Markierung, um die eine oder die mehreren installierten Komponenten, deren Konfidenzwert innerhalb des Konfidenzwertschwellenbereichs liegt, als nicht ordnungsgemäß installierte Komponenten zu identifizieren.

12. System nach Anspruch 1, wobei es sich bei dem für die installierte Komponente identifizierten Fehlertyp um eine Installation mit hohem Risiko oder eine Installation mit niedrigem Risiko handelt.

13. System nach Anspruch 12, wobei im Falle, dass der Fehlertyp in einer Installation mit hohem Risiko ist, der Konfidenzwertschwellenbereich einen unteren Schwellenwert aufweist, der kleiner ist als der untere Schwellenwert für die Installation mit niedrigem Risiko.

14. System nach Anspruch 1, wobei die Verarbeitungsvorrichtung so konfiguriert ist, dass sie mehrere Anfangsmarkierungen als Elemente erzeugt, die nicht ordnungsgemäß installiert sind und der nicht ordnungsgemäß installierten Komponente zugeordnet sind, und falls eine Überlappung von zwei oder mehr der Anfangsmarkierungen einen vorbestimmten Schwellenwert überschreitet, die Verarbeitungsvorrichtung so konfiguriert ist, dass sie die zwei oder mehr der Anfangsmarkierungen zusammenführt, um die Markierung zu erzeugen.

15. System nach Anspruch 1, wobei die Verarbeitungsvorrichtung so konfiguriert ist, dass sie das Bild automatisch zurückweist, falls die Qualität des Bildes nicht ausreicht, um die eine oder mehreren Komponenten zu erkennen, und eine Benachrichtigung erzeugt, in der die Eingabe eines zusätzlichen Bildes angefordert wird, dessen Qualität ausreicht, um die eine oder mehreren Komponenten zu erkennen.

## Revendications

1. Système permettant de déterminer la précision d'installation dans une construction, le système comprenant :
une base de données configurée pour stocker électroniquement des données, les données incluant un modèle de détection d'installation formé sur la base de données historiques d'installation dans une construction ; et
un dispositif de traitement en communication avec la base de données, le dispositif de traitement étant configuré pour :
recevoir comme entrée une image associée à une installation dans une construction ;
détecter électroniquement un ou plusieurs composants installés dans l'installation dans une construction représentée sur l'image ;
exécuter le modèle de détection d'installation pour déterminer la précision d'installation des un ou plusieurs composants installés ;
générer une valeur de confiance associée à la précision d'installation déterminée pour chacun des un ou plusieurs composants installés ;
si la valeur de confiance se situe dans une plage seuil de valeur de confiance pour un ou plusieurs composants installés respectifs, identifier les un ou plusieurs composants installés respectifs comme étant mal installés, dans lequel la plage seuil de valeur de confiance est sélectionnée en fonction du type de défaut identifié pour chacun des un ou plusieurs composants installés ; et
générer un marqueur dans l'image pour identifier les un ou plusieurs composants installés dont la valeur de confiance se situe dans la plage seuil de valeur de confiance comme étant un composant mal installé.

2. Système selon la revendication 1, dans lequel le modèle de détection d'installation est formé sur la base d'au moins une norme de construction du fabricant ou de l'industrie.

3. Système selon la revendication 1, comprenant un dispositif électronique utilisateur en communication avec le dispositif de traitement, le dispositif électronique utilisateur étant capable de transmettre électroniquement l'image comme entrée au dispositif de traitement via une interface de communication, et dans lequel le dispositif de traitement est configuré pour transmettre une image mise à jour au dispositif électronique utilisateur via l'interface de communication, l'image mise à jour incluant le marqueur généré dans l'image pour identifier les composants mal installés.

4. Système selon la revendication 1, dans lequel le dispositif de traitement est configuré pour transmettre au dispositif électronique utilisateur des instructions sur la manière d'installer correctement les un ou plusieurs composants.

5. Système selon la revendication 1, dans lequel les un ou plusieurs composants installés dans l'installation de construction représentée sur l'image sont de différents types d'installations, et dans lequel le dispositif de traitement est configuré pour détecter, identifier et classer chaque type des différents types d'installations.

6. Système selon la revendication 1, dans lequel (i) si la valeur de confiance est égale ou supérieure à une valeur seuil inférieure de la plage seuil de valeur de confiance, le dispositif de traitement est configuré pour transmettre une image mise à jour à un dispositif électronique utilisateur via une interface de communication, l'image mise à jour incluant le composant mal installé identifié, et (ii) si la valeur de confiance est inférieure à la valeur seuil inférieure de la plage seuil de valeur de confiance, le dispositif de traitement est configuré pour transmettre une image mise à jour à un dispositif électronique de réviseur via une interface de communication pour demander la confirmation de l'identification du composant mal installé, et dans lequel la validation de l'image mise à jour par le réviseur forme le modèle de détection d'installation et améliore les performances du modèle de détection d'installation.

7. Procédé de détermination de la précision d'une installation dans une construction, comprenant :
la réception comme entrée d'un système de détermination de la précision d'installation dans une construction d'une image associée à une installation dans une construction, le système de détermination de la précision d'installation dans une construction incluant (i) une base de données configurée pour stocker électroniquement des données, les données incluant un modèle de détection d'installation formé sur la base de données historiques d'installation dans une construction, et (ii) un dispositif de traitement en communication avec la base de données ;
la détection électronique d'un ou plusieurs composants installés dans l'installation de construction représentée sur l'image ;
l'exécution du modèle de détection d'installation pour déterminer la précision d'installation des un ou plusieurs composants installés ;
la génération d'une valeur de confiance associée à la précision d'installation déterminée pour chacun des un ou plusieurs composants installés ;
si la valeur de confiance se situe dans une plage seuil de valeur de confiance pour un ou plusieurs composants installés respectifs, l'identification des un ou plusieurs composants installés respectifs comme étant mal installés, dans lequel la plage seuil de valeur de confiance est sélectionnée en fonction d'un type de défaut identifié pour chacun des un ou plusieurs composants installés ; et
la génération d'un marqueur dans l'image pour identifier les un ou plusieurs composants installés dont la valeur de confiance se situe dans la plage seuil de valeur de confiance comme étant un composant mal installé.

8. Procédé selon la revendication 7, comprenant au moins une parmi :
la capture de l'image de l'installation dans une construction à l'aide d'un dispositif électronique utilisateur et la transmission de l'image au système pour déterminer la précision de l'installation dans une construction ;
la transmission d'une image mise à jour au dispositif électronique utilisateur via une interface de communication, l'image mise à jour incluant le marqueur généré dans l'image pour identifier les composants mal installés ;
la transmission au dispositif électronique utilisateur d'instructions sur la manière d'installer correctement les un ou plusieurs composants ; ou
la formation du modèle de détection d'installation sur la base d'au moins une norme de construction du fabricant ou de l'industrie.

9. Procédé selon la revendication 7, dans lequel les un ou plusieurs composants installés dans l'installation dans une construction représentée sur l'image sont de différents types d'installations, et le procédé comprend la détection et l'identification de chaque type des différents types d'installations.

10. Procédé selon la revendication 7, dans lequel (i) si la valeur de confiance est égale ou supérieure à une valeur seuil inférieure de la plage seuil de valeur de confiance, le procédé comprend la transmission d'une image mise à jour à un dispositif électronique utilisateur via une interface de communication, l'image mise à jour incluant le composant mal installé identifié, et (ii) si la valeur de confiance est inférieure à une valeur seuil inférieure de la plage seuil de valeur de confiance, le procédé comprend la transmission d'une image mise à jour à un dispositif électronique de réviseur via une interface de communication pour demander la confirmation de l'identification du composant mal installé, et dans lequel la validation de l'image mise à jour par le réviseur forme le modèle de détection d'installation et améliore les performances du modèle de détection d'installation.

11. Support non transitoire lisible par ordinateur stockant des instructions permettant de déterminer la précision d'une installation dans une construction, exécutables par un dispositif de traitement, dans lequel l'exécution des instructions par le dispositif de traitement amène ce dernier à :
recevoir comme entrée d'un système de détermination de la précision d'installation dans une construction une image associée à une installation de construction, le système de détermination de la précision d'installation dans une construction incluant (i) une base de données configurée pour stocker électroniquement des données, les données incluant un modèle de détection d'installation formé sur la base de données historiques d'installation dans une construction, et (ii) le dispositif de traitement en communication avec la base de données ;
détecter électroniquement un ou plusieurs composants installés dans l'installation dans une construction représentée sur l'image ;
exécuter le modèle de détection d'installation pour déterminer la précision d'installation des un ou plusieurs composants installés ;
générer une valeur de confiance associée à la précision d'installation déterminée pour chacun des un ou plusieurs composants installés ;
si la valeur de confiance se situe dans une plage seuil de valeur de confiance pour un ou plusieurs composants installés respectifs, identifier les un ou plusieurs composants installés respectifs comme étant mal installés, dans lequel la plage seuil de valeur de confiance est sélectionnée en fonction du type de défaut identifié pour chacun des un ou plusieurs composants installés ; et
générer un marqueur dans l'image pour identifier les un ou plusieurs composants installés dont la valeur de confiance se situe dans la plage seuil de valeur de confiance comme étant un composant mal installé.

12. Système selon la revendication 1, dans lequel le type de défaut identifié pour le composant installé est une installation à haut risque ou une installation à faible risque.

13. Système selon la revendication 12, dans lequel si le type de défaut est l'installation à haut risque, la plage seuil de valeur de confiance présente une valeur seuil inférieure qui est inférieure à la valeur seuil inférieure pour l'installation à faible risque.

14. Système selon la revendication 1, dans lequel le dispositif de traitement est configuré pour générer de multiples marqueurs initiaux en tant qu'éléments mal installés et associés au composant mal installé et, si un chevauchement de deux ou plus des marqueurs initiaux est supérieur à une valeur de seuil prédéterminée, le dispositif de traitement est configuré pour fusionner les deux ou plus des marqueurs initiaux pour générer le marqueur.

15. Système selon la revendication 1, dans lequel le dispositif de traitement est configuré pour rejeter automatiquement l'image si celle-ci est de qualité insuffisante pour détecter les un ou plusieurs composants, et générer une notification demandant la saisie d'une image supplémentaire de qualité suffisante pour détecter les un ou plusieurs composants.
